# EUROPEAN PATENT APPLICATION

(11) **EP 4 438 169 A1**
(43) Date of publication of application: **02.10.2024**
(21) Application number: 24167879.6
(22) Date of filing: 29.03.2024
(51) Int. Cl.: B01J 20/20, B01J 20/28, B01J 20/30, C01B 32/318

(54) **PROCESS FOR THE PRODUCTION OF A CARRIER OF ORGANIC AND INORGANIC MOLECULES**

(30) Priority: 30.03.2023 IT 202300006192
(71) Applicant: Consorzio per la Ricerca e la Dimostrazione sulle Energie Rinnovabili, 50038 Scarperia e San Piero (FI) (IT)
(72) Inventor: CHIARAMONTI, David, 50137 FIRENZE (IT); RIZZO, Andrea Maria, 50143 FIRENZE (IT); CASINI, David, 51015 MONSUMMANO TERME - PT (IT)
(74) Representative: Nesti, Antonio

(57) **Abstract**

Process for obtaining charcoal as a vector in the nutritional field of organic and inorganic molecules to be transported consisting of the following steps: selecting one or more molecules to be transported for a desired nutritional treatment; identifying a set of chemical-physical parameters of the molecules or mixtures of molecules to be transported comprising at least size, polarity, molar volume, viscosity, state at room temperature; feeding a quantity of biomass of quality selected on the basis of chemical-physical parameters of the biomass comprising at least purity from contaminants, specific density, ash content and impurities, related to the chemical-physical parameters of the molecules to be transported in order to obtain charcoal of the desired purity with the purpose of ab-/adsorption of said molecules and their release of the molecules to be transported; processing of the biomass to a desired size with possible drying and screening pre-treatments; carbonization of the biomass, and obtaining a charcoal with a matrix having a desired porosity and possibly bearing functional groups on its surfaces; grinding of the carbonaceous solid obtained and screening until particles of a desired size are obtained.

## Description

### Sector of the Invention

The invention relates to a process for the production of a carrier, or vector, of organic and inorganic molecules (or mixtures thereof) in particular in the nutritional and pharmaceutical field, consisting of a charcoal, or biochar, obtained substantially by the sole carbonization of a biomass without further thermal or chemical processes aimed at modifying the structure of the charcoal obtained.

### State of the art

Biochar is known to find application in the most varied fields thanks to its properties and the diversity of materials that can be used in the synthesis thereof.

In particular, the use of biochar produced from different biomasses is known, for example algae and plant biomass, forest and domestic residues, animal waste, sewage sludge, etc... and is widely used as a material to absorb pesticides, phenols, dyes, polynuclear aromatics, inorganic and pharmaceutical products by removing them from wastewater, for example.

The use of biochar as a fertilizer in agriculture is also known, used as a material for absorption and subsequent slow release of nutrients.

For example, the slow release of nitrate from biochar used as a soil improver has been suggested as a potential mechanism for nutrient delivery to plants.

Also for the recovery and release of nutrients, the use of biochar has been suggested for the capture of phosphorus from effluents and for the recycling thereof in agricultural soils.

Biochar has also been tested as an absorbent material and for the release of fragrances consisting of alcohols, aldehydes, alkanes and terpenes.

In a different field of application, biochar has found use as a food supplement to improve animal health, increase efficiency in nutrient intake and therefore productivity. In fact, it has been found that biochar is enriched with nitrogen-rich organic compounds during the digestion process, and once excreted becomes a valuable organic fertilizer causing less nutrient loss and greenhouse gas emissions during storage and soil application than manure without biochar content.

In general, carbon-based porous materials such as biochar, including carbon molecular sieves and activated carbon, are synthesized from fruit shells, wood, charcoal, or polymer by pyrolysis and physical or chemical treatment at elevated temperatures and can exhibit porosity in both the mesopore and micropore ranges. Mesoporous carbons in particular are synthesized by carbonization from organic sources, such as sucrose, under acid treatment using matrices to form a transient silica-carbon complex from which the silica is removed by alkali treatment.

However, mesoporous carbons have significant limits in the retention and release of molecules, due to the spatial confinement imposed by the small size of the pores, and the low conductivity resulting from the presence of functional groups and surface defects and the collapse of the porous structures during high temperature treatments or graphitisation.

In order to preserve the chemical, physical and biological properties of the retained molecules and their release under desired conditions, "encapsulation" stabilization techniques have been developed by which the mixture of bioactive material is coated with another single material or a combination of materials.

For example, the integration of the encapsulation technology of the fertilizer loaded on the biochar has been introduced in the agricultural field, as a solution for the extended release mechanism. In this sector, the use of encapsulation is also focused on the preparation of complex systems based on biopolymers, i.e. the preparation of microcapsule formulations involving two active agents.

As a carrier of fertilizing material, biochar is indeed used for its characteristics of slow release of pre-loaded molecules, but limited to organic and inorganic fertilizing molecules in the agronomic field.

Finally, carbonaceous materials are used as a vehicle for the transport and release of biomolecules but are not identifiable as biochar, as they have undergone further thermal and/or chemical treatment processes with structural modification (such as activated carbons, nanotubes, mesoporous carbons).

From WO2017117314 porous carbonaceous structures are known, including biochar, capable of retaining additives such as nutrients, substances, microbes or enzymes beneficial for use in agricultural applications. The additives can be incorporated with the biochar in various ways, for example by infusion, to provide for the gradual release of the additive to the surrounding environment, such as the medium. However, this document does not refer to the possibility of producing a structured and engineered carrier based on the characteristics of what must be loaded and distributed internally or on the surfaces of the product itself.

In summary, applications of biochar are known in the state of the art that exploit its capacity to adsorb, even selectively, organic and inorganic molecules, particularly in the industrial sector (detoxification, purification, cleaning, decontamination, etc.), in the agronomic sector as a slow-release fertilizer and in the feed sector as a food supplement.

Among these a particularly apparent limit is given by the fact that the use of biochar as an ab-/ad-absorbent material is aimed at absorbing and retaining specific molecules, for the sole purpose of filtering and immobilizing (like the common use of commercial activated carbons),
As an example, from "Zhang Mingming et al. - Adsorption Characteristics of bio-oil on Biochar in Bioslurry Fuels - Energy and Fuels vol.31, n.9 - 18 August 2017" and in "Zhang Mingming et al. - Bioslurry as a Fuel, Fuel properties evolution and aging during bioslurry storage - Energy and Fuels vol.27, n.12 - 21 November 2013" biomass carbonization processes are described in which chemical substances are used to wash or modify feedstock and obtain a biochar to be used as a filter to load it with bio-oil.

In the technical solutions available to date, numerous limits have been found for the use of the biochar as a transport vehicle and release of active molecules from the point of view of yield, i.e. the amount of molecule that the biochar can retain.

The current limitations of the state of the art are particularly felt in the nutritional and pharmaceutical sector in which it is essential to be able to administer the required dosage of molecules with as limited an amount of carrier as possible and at the same time be able to guarantee a predictable release of the molecules.

### Object of the invention

The present invention is therefore intended to overcome the drawbacks of already known solutions and to propose a process for the production of biochar as a high-yielding vehicle for the transport and subsequent release of organic and inorganic molecules, in particular for use in the nutritional and pharmaceutical sectors.

### Summary of the invention

These objects have been achieved by providing a process and a biochar according to the attached claims.

According to the invention, the biochar is obtained by thermochemical conversion of carbonization of a biomass selected according to the molecule to be transported, without the need for further thermal or chemical processes aimed at modifying the structure of the charcoal to obtain a final desired porosity.

In fact, it has been found that the choice of biomass both as a species and as part of the plant used is fundamental to obtain at low cost a biochar with the desired chemical-physical characteristics that is functional as a carrier of molecules or mixtures of molecules to be transported and released.

The specific molecule that needs to be first absorbed and then released from the porous matrix of the biochar is selected based on dimensional, structural and polar characteristics and, in parallel, the biomass is selected based on criteria of specific density, natural internal structure, ash content and impurities, in order to obtain the desired final product with the specific functionality suitable for the absorption and release of the molecule already identified.

A first advantage is that the biochar of the invention is an excellent specialized vector with respect to the organic and inorganic molecules (or mixtures thereof) of interest, in particular in the nutritional and pharmaceutical sector thanks to the obtaining of a highly porous internal and surface structure of adequate size that allows a high retention capacity and subsequent release of the preloaded target molecules.

A further advantage is the possibility of using only a biomass carbonization process without the need for further structural modification treatments of the product.

A still further advantage is the wide availability of biomass suitable as a starting material and pyrolysis technologies, in particular carbonization, for the conversion of the same.

### Detailed description

A preferred example of the implementation of a process according to the invention for obtaining biochar to be used as a carrier, for example in the nutritional and pharmaceutical field of organic and inorganic molecules, is described below.

The process comprises a first step of identifying one or more molecules intended for a preferred application, for example, in the nutritional sector, of short-chain fatty acids such as butyric and lauric acid, or mixtures of mono-, di- and triglycerides thereof.

The identified molecules are then characterized according to parameters and structural and chemical-physical properties such as specific size, polarity, molar volume, viscosity, state at room temperature, which are relevant for the transport and release capacity.

The mixtures of molecules to be loaded into the biochar can also be characterized by their relative percentage content by weight of each individual type of molecule contained therein, as well as in terms of general characteristics including viscosity, state at room temperature, density, possible presence of contaminants.

Once the characteristics of the molecules to be transported that are relevant for their absorption/adsorption and controlled release have been identified, a quantity of biomass, having an origin and quality selected on the basis of structural parameters such as specific density, natural internal structure and physical chemical properties such as purity from contaminants and the content of ash and impurities, which after the carbonization treatment are related to the characteristics of the molecules to be transported, is fed in such a way as to obtain a biochar with porosity distribution and adsorption functional groups that in combination with the structural and functional characteristics of the molecules allow a high transport yield.

The selected biomass is then carbonized to obtain a carbonaceous solid, or biochar, with a porous matrix with the desired characteristics and useful for ensuring the absorption and release of the molecules to be transported.

In fact, it has been found that by appropriately selecting the species of plants and/or the part of plants to be used as biomass and in relation to the molecules to be transported by means of the carbonization phase alone, it is possible to obtain a charcoal with a porosity distribution capable of retaining and transporting the molecules that derives from the carbonization of the structure and the natural porosity of the fresh biomass and at the same time to activate functional groups on the surfaces of the biochar that, interacting with the polarity of the molecules, contribute to the adsorption and release of the specific organic and inorganic molecules (or mixtures thereof) transported and therefore to the performance of the final product.

The biochar obtained is then subjected to grinding and screening to obtain particles of a desired size, for example of the order of 100 µm (micrometers) in any case greater than the size of the resulting macroporosity of the biochar.

In different embodiments of the process, the carbonization technology adopted may be a slow pyrolysis (also oxidative) because it is particularly suitable for achieving the desired characteristics of the final product, in particular operating in the typical range of pyrolysis, 400-700°C and being able to choose whether to adopt the technology, known per se, rotary kiln, fixed bed, fluid bed, etc.

In the execution of this phase, the most significant parameters may also be varied, such as the size of the incoming biomass (e.g. for controlling the heating rate) and its moisture content (e.g. to increase the presence of mesopores in the coal obtainable from it), as well as the main process parameters such as the heating rate, maximum process temperature, residence time at maximum and total temperature, flow of inert gas or sub-stoichiometric presence of oxidizing agent.

The biochar is finally added with the molecules to be transported with technologies known per se, for example by mixing or infusion until a final product composed of the biochar loaded with the target molecules is obtained.

The conformity of the product obtained with the required chemical-physical characteristics, in particular for its use in the nutritional field, may be verified or possibly achieved through thermal and/or chemical post-treatments that serve to achieve the purity required for the product (processes that may partially alter the previously obtained porous structure, but with the aim of improving the chemical and non-physical-structural characteristics).

In one application example, the process was developed for the production of a biochar for the absorption and subsequent release of glyceride mixtures of short-chain fatty acids in the intestinal environment for the prevention of diseases related to the colorectal tract.

In this example:

### Identification of the characteristics of the molecules to be transported

The target mixture of short chain fatty acid glyceride molecules to be transported has been characterized in the chemical-physical properties that will be useful for determining the optimal characteristics of the biochar with carrier function, in particular the size range of the molecules and their polarity.

The mixture is mainly composed of monobutyrin (butyric acid mono-glyceride) for about 51wt%. Monobutyrin has a molecular weight of 162 daltons, with a density of 1.1±0.1 g/cm³, a neutral formal charge molecule with a polar surface area of 66.8 ², and characterized by a molar volume of 143.0±3.0 cm³.

### Biomass selection

A virgin wood biomass (poplar) was preferred to other lignocellulosic types due to the low ash content, only 1.05% in dry weight, and metals or impurities in general, and for a low skeletal density that usually provides for a high presence of pores in the range of meso and macro-porosity.

### Choice of size

The size of the biomass was sifted to below 8mm, with separation of the ash-rich parts, such as bark residues or green material, which downstream of the carbonization process would tend to increase their concentration in the carbonaceous solid residue. The size of the biomass is selected according to the type of plant to be used and for the management of the desired heating rate of the feedstock for its carbonization.

### Carbonization and related process parameters

Based on the characteristics of the molecules to be transported identified above, the desired physical-structural characteristics of the biochar useful for the function of the carrier were defined and, based on the selected biomass, it was evaluated whether or not the presence of any functional groups on its surfaces obtained by carbonization are favourable to the retention and release of the transported molecules.

The carbonization process was then carried out by oxidative pyrolysis in a continuous system with horizontal cylindrical reactor with auger, electrically heated for temperature control, with the following process parameters: maximum process temperature 550°C, average heating rate in the range of 10-20°C/min, a residence time at the maximum temperature of about 30 minutes.

Advantageously, it has been found that the substoichiometric concentration of oxygen that is maintained in the slow oxidative pyrolysis process tends to modify the surface properties of the biochar, increase the porosity of the material in the range of micro- and meso-porosity and decrease any organic pollutants on the surfaces of the solid process residue as well as promote the presence of oxygen-containing functional groups, without critically affecting the mass yield of the final product.

### Product obtained

The biochar produced with the set process parameters met the required requirements and revealed the following chemical-physical characteristics:
- ash content: 1.3% dry weight;
- carbon content: 84.0% dry weight and ash free;
- metal content below the limit of detection;
- benzo(a)pyrene content <0.05 mg/kg
- a specific surface area (BET) of 273 m²/g and specific porosity volume (DFT) of 0.157 cm³/g
- a specific porosity volume (by mercury porosimeter) of 2,819 ml/g with a porosity of 84.9% by volume.

### Grinding

The biochar obtained was then ground and screened to obtain particles with a size greater than 50 µm, between 70 and 100 µm.

It is understood that the indicated diameter range is relative to the described example but that different applications of the process for the transport of even larger molecules or compounds, for example stem cells, requiring a vector with larger porosity are not excluded.

In the development of this phase, it was found that the size of the biochar obtained is functional to the performance of the final product for the absorption of the molecules to be transported.

For this purpose the size of the particles has been determined as the best equilibrium point between the maximization of the surfaces that will come into contact with the molecule/mixture to be absorbed and subsequently released, and the maximum size of the macropores that characterizes the carbonaceous residue (e.g. a poplar biochar with a maximum pore size of about 50 µm can be ground and screened to particles with a size range between 70 and 100 µm).

### Additivation

The biochar was added by mixing with the short chain fatty acid molecules to be transported.

In this case, the final result sought is a fine powder of biochar, without the presence of lumps or any conglomerates, capable of retaining the loaded mixture without the uncontrolled release of material. Some substances or mixtures may need ideal conditions to facilitate their absorption on the carrier, for example achieving a desired temperature in order to improve their viscosity.

### Final Product

The final product consisting of the biochar added with the molecules to be transported was finally tested using the simulated medium of the intestinal environment (with its characteristic compounds present in the solution and with defined temperature and pH).

The results obtained can also be compared with water release tests (always at controlled temperature and pH), so as to separate any synergistic effects with the compounds present in the simulated intestinal environment.

In order to improve the performance of the product in the nutritional field, it is also possible to carry out a product survey with complete chemical-physical characterization in order to clarify whether or not for further treatments are needed to achieve the required quality.

For example, an excessive content of organic pollutants can be reduced to the desired threshold by means of low temperature thermal treatment in a ventilated environment, a process also useful for pre-sterilization of the material.

An excessive content of ashes, or more simply of one of the microelements present therein in high amounts, can be reduced by washing with water or acid, and then proceeding to a correction of the pH to the desired level.

The invention has numerous advantages, in particular because by adopting substantially only a carbonization process, performances of the final product are obtained that are the result of the dimensional and structural characteristics of the molecules and the biochar and of the biochemical interactions between the functional groups present in the surfaces of the biochar with the molecules to be transported.

Further margins for improving the performance of the process can also be obtained simply by increasing the concentration of the functional groups with oxidation activity of the carrier surfaces by means of thermal and/or chemical treatment that does not modify the structure of the biochar. The characterization of the product for this purpose is through quantification of the CEC (Cation Exchange Capacity), of the AEC (Anion Exchange Capacity) and more generally of the IEC (Ion Exchange Capacity).

The process therefore allows, once the molecules to be transported for a given application have been identified, for example in nutraceutics, obtaining a "tailored" biochar having the desired performance and quality characteristics necessary for its use to produce a transport vector and release of appropriate organic or inorganic molecules.

The invention has been described with reference to a preferred embodiment, but it is understood that equivalent modifications may be made without in any case departing from the scope of protection granted to this industrial patent.

## Claims

1. Process for the production of a vector of organic and/or inorganic molecules for transport comprising the following steps:
identification of one or more molecules or mixtures of molecules to be transported,
selection of a first set of structural parameters of the molecules or mixtures of molecules to be transported, comprising at least molar volume of the molecules or mixtures of molecules to be transported,
selection of a second set of structural parameters characterizing a fresh biomass and comprising at least an average natural porosity greater than the molar volume of the molecules or mixture of molecules to be transported.
selection of an amount of fresh biomass to be carbonized, **characterized by** said second set of parameters selected according to at least one species and part of a plant
carbonization by pyrolysis of the selected biomass until a vector consisting of charcoal with a porosity greater than the molar volume of the molecules to be transported is obtained.

2. Process according to Claim 1 wherein said average natural porosity of the fresh biomass is in the range of meso and macro-porosity.

3. Process according to one of the preceding claims comprising a phase of grinding the obtained charcoal until particles of a size greater than said porosity of the charcoal are obtained, preferably a size greater than 50 µm.

4. Process according to one of the preceding claims, wherein said carbonization phase of the remaining quantity of fresh biomass is carried out by oxidative pyrolysis of the biomass.

5. Process according to one of the preceding claims wherein said carbonization step of the remaining amount of fresh biomass is carried out at a temperature comprised between 400°C and 700°C.

6. Process according to one of the preceding claims comprising a screening phase of the fresh biomass selected to a size below 8mm and with separation upstream of the screening of any ash-rich parts, such as bark residues or green material.

7. Process according to one of the preceding claims wherein said carbonization of the remaining amount of fresh biomass is carried out until obtaining a charcoal with a porosity distribution mainly comprised in the order of the meso-porosity, between 2 and 50 nm, and with an additional contribution in the range of the macro-porosity, greater than 50 nm and up to about 50 µm.

8. Process according to one of the preceding claims comprising a step of thermal and/or chemical post-treatment of the obtained charcoal, selected from thermal treatment preferably at 200°C for 24-48 h, acid washing preferably with 0.05M HCl for 24 h with 50:1 mass ratio of a charcoal solution, in order to achieve a required purity of the charcoal.

9. Use of a charcoal obtained by a process according to one of the preceding claims as a transport and delivery vector of organic or inorganic molecules in the nutritional or pharmaceutical field.

10. Vector for the transport and delivery of molecules, comprising a charcoal obtained according to one of the Claims 1-8, added with organic or inorganic molecules.
